# FASCICULE DE BREVET EUROPEEN

(11) **EP 3 053 789 B1**
(45) Date de publication et mention de la délivrance du brevet: **18.04.2018**
(21) Numéro de dépôt: 16151829.5
(22) Date de dépôt: 19.01.2016
(51) Int. Cl.: B60S 1/26, B60S 1/08, B60S 1/16

(54) **ROUE D'ENTRAÎNEMENT ET SYSTÈME D'ENTRAINEMENT ASSOCIÉ**
ANTRIEBSRAD UND ENTSPRECHENDES ANTRIEBSSYSTEM
DRIVING WHEEL AND ASSOCIATED DRIVE SYSTEM

(30) Priorité: 22.01.2015 FR 1550523
(43) Date de publication de la demande: 10.08.2016
(73) Titulaire: Valeo Systèmes d'Essuyage, 78322 Le Mesnil Saint Denis (FR)
(72) Inventeur: LASSALLE, Christophe, 86450 Leigne les Bois (FR)
(74) Mandataire: Vincent, Catherine Marie Marguerite

(56) Documents cités:
- WO-A1-2014/010616
- JP-A- 2009 225 520
- JP-A- 2010 246 261
- JP-A- 2011 244 562

## Description

La présente invention porte sur une roue d'entraînement, telle qu'une roue dentée. La présente invention porte également sur un système d'entraînement notamment d'un mécanisme d'essuyage pour véhicule automobile.

L'invention propose plus particulièrement un système d'entraînement d'un balai d'essuyage d'un panneau vitré de véhicule automobile.

Un tel système d'entraînement comporte généralement un dispositif de production d'un mouvement de balayage alterné du balai par rapport au panneau vitré.

Le dispositif de production d'un mouvement de balayage alterné du balai comprend notamment un moteur électrique, tel qu'un moteur réversible, et un moyen de transformation du mouvement de rotation de l'arbre moteur en un mouvement de rotation alternée d'un arbre portant un bras d'entraînement du balai d'essuyage.

Plus spécifiquement, dans de tels systèmes d'entraînement notamment de mécanisme d'essuyage pour véhicules automobiles, il est couramment utilisé une roue d'entraînement dentée.

Dans le cas d'un moteur électrique réversible, l'arbre de rotation de la roue dentée peut être en prise directe avec un bras d'essuie-glace portant le balai d'essuyage. En alternative, la roue dentée peut être reliée par un ensemble de pièces mobiles à un arbre de sortie pour l'entraînement d'un bras d'essuie-glace. Il peut s'agir notamment d'une manivelle reliée en bout d'arbre de la roue dentée et d'un ensemble de bielles manivelles relié à l'arbre de sortie d'entraînement du bras d'essuie-glace.

Ces roues dentées sont de façon connue réalisées à partir d'une roue moulée traversée par un arbre de rotation central et présentant une dentelure sur le rebord périphérique.

Par ailleurs, un tel système d'entraînement est raccordé électriquement pour son alimentation et sa commande.

Cette commande est notamment fonction de la position relative du système d'entraînement par rapport au panneau vitré. Cette information est déterminée par rapport à la position angulaire de la roue dentée. La position angulaire de la roue dentée est déterminée à l'aide d'un moyen de détection de la position angulaire de la roue. Il est connu pour cela d'utiliser un aimant fixé sur la roue dentée, généralement au centre de la roue dentée et coopérant avec au moins un capteur à proximité de la trajectoire de rotation de l'aimant. Un tel capteur est par exemple prévu sur une carte électronique portée par une plaque de fermeture d'un socle dans lequel est aménagée la roue dentée.

Afin de maintenir l'aimant sur la roue dentée, la roue dentée peut comporter un ou plusieurs moyens de retenue de l'aimant aptes à maintenir l'aimant sur la roue dentée. Selon une solution connue, les moyens de retenue de l'aimant sont réalisés sous la forme d'éléments flexibles.

Cependant lors de l'assemblage de l'aimant à la roue dentée, certains moyens de retenue peuvent être endommagés par la force exercée sur les moyens de retenue lors de l'insertion de l'aimant par exemple sur un support d'aimant prévu sur la roue dentée. Ces moyens de retenue peuvent par exemple être sollicités en flexion au-delà de leur point de rupture, provoquant ainsi une casse des moyens de retenue.

De plus, pour l'approvisionnement des roues dentées avant l'assemblage sur le véhicule, plusieurs roues dentées et leurs arbres associés sont par exemple rangés dans un même contenant tel qu'un carton afin d'être transportés. Cependant, lors du transport, un ou plusieurs moyens de retenue d'une roue dentée peuvent être endommagés ou cassés. Ceci se produit notamment lorsqu'un moyen de retenue est sollicité par un arbre de rotation d'une autre roue dentée pendant le transport.

Les roues dentées présentant un ou plusieurs moyens de retenue qui sont abîmés ou cassés ne peuvent donc plus participer au maintien de l'aimant sur la roue dentée. Ces roues dentées sont donc des pièces de rebuts inutilisables dans le système d'entraînement du mécanisme d'essuyage de panneau vitré par exemple.

Le document JP 2010 246 261 A montre une roue d'entraînement telle que décrite dans le préambule de la première revendication. La présente invention a donc pour objectif de pallier au moins partiellement ces inconvénients de l'art antérieur de manière à réduire le taux de rebuts de telles roues d'entraînement.

À cet effet, l'invention a pour objet une roue d'entraînement notamment d'un système d'entraînement d'un mécanisme d'essuyage de panneau vitré de véhicule automobile, présentant :
- un support apte à porter un aimant pour la détection de la position angulaire de la roue d'entraînement, et
- au moins un moyen de retenue de l'aimant sur le support, la roue d'entraînement présentant en outre au moins un moyen de protection d'au moins un moyen de retenue, la roue d'entraînement étant caractérisé en ce que le moyen de protection est associé de l'aimant et agencé en regard du moyen de retenue associé.

Le moyen de protection est agencé de manière à protéger un ou plusieurs moyens de retenue de l'aimant, de façon à éviter une sollicitation non désirée du moyen de retenue en particulier lors du transport d'une pluralité de roues d'entraînement.

Le moyen de protection permet ainsi de limiter la casse d'un ou plusieurs moyens de retenue de l'aimant pendant le transport.

Selon un aspect de l'invention, le moyen de protection est agencé en s'étendant selon une direction sensiblement circulaire de manière à présenter de la matière dépassant de part et d'autre du moyen de retenue associé. Le ou les moyens de protection sont ainsi agencés de manière à empêcher l'appui d'éléments externes à la roue d'entraînement, tels que les arbres de rotation des autres roues d'entraînement, contre les moyens de retenue de l'aimant.

Selon un exemple de réalisation, le moyen de protection peut être amovible. Dans ce cas, le moyen de protection peut être assemblé à la roue d'entraînement de façon provisoire le temps du transport des roues d'entraînement pour l'approvisionnement en roues avant l'assemblage sur le véhicule. Il peut s'agir notamment d'une coiffe sensiblement circulaire venant entourer une pluralité de moyens de retenue agencés de manière circulaire autour de l'aimant.

Selon un autre aspect de l'invention, le moyen de protection est réalisé d'une seule pièce avec la roue d'entraînement.

Ainsi, le moyen de protection peut limiter l'endommagement du ou des moyens de retenue associés lors du transport pour l'approvisionnement des roues d'entraînement mais également après le transport, notamment lors de l'assemblage de l'aimant sur la roue d'entraînement.

Selon un autre aspect de l'invention, le moyen de protection d'un moyen de retenue associé de l'aimant est agencé à une distance prédéterminée du support de l'aimant inférieure au diamètre d'un arbre de rotation externe à ladite roue d'entraînement.

Ainsi, lors du transport dans un même contenant de plusieurs roues d'entraînement et leur arbre de rotation associés, les moyens de protection ainsi agencés sur une première roue d'entraînement empêchent les arbres de rotation associés à d'autres roues d'entraînement de venir solliciter les moyens de retenue sur la première roue d'entraînement.

Selon un mode de réalisation particulier de l'invention, le moyen de protection d'un moyen de retenue associé de l'aimant comprend au moins une nervure de protection agencée en regard d'un moyen de retenue associé de l'aimant. La nervure de protection peut présenter une forme sensiblement en arc de cercle.

Selon un exemple de réalisation, le moyen de retenue de l'aimant et le moyen de protection associé sont agencés en saillie par rapport à une surface sensiblement plane de la roue d'entraînement.

Le moyen de protection peut présenter une hauteur sensiblement égale ou supérieure à la hauteur du moyen de retenue associé.

Ainsi, lors du transport, les éléments externes à la roue d'entraînement tels que les arbres de rotation des autres roues d'entraînement transportées dans un même contenant, arrivant au-dessus de la face de la roue apte à porter l'aimant viennent alors en appui sur le support de l'aimant, sur les moyens de retenue et sur les moyens de protection. Ceci a pour effet de limiter la sollicitation du moyen de retenue.

Selon un mode de réalisation particulier de l'invention, la roue d'entraînement comprend :
- une pluralité de moyens de retenue de l'aimant agencés autour du support de l'aimant, en particulier agencés selon un premier cercle ayant pour centre le support de l'aimant,
- une pluralité de moyens de protection respectivement associés à un moyen de retenue de l'aimant, en particulier agencés selon un deuxième cercle concentrique avec le premier cercle.

Le deuxième cercle est notamment extérieur au premier cercle. Selon un mode de réalisation particulier de l'invention, la roue d'entraînement comprend des nervures radiales de renfort, et le moyen de protection associé d'un moyen de retenue s'étend entre deux nervures radiales de renfort.

Les nervures de renfort radiales permettent d'améliorer la tenue mécanique de la roue d'entraînement. Le nombre de nervures de renfort radiales est déterminé selon un compromis en fonction du nombre de moyens de retenue, de l'encombrement et de la tenue mécanique.

L'étendue d'un moyen de protection, tel qu'une nervure de protection, entre deux nervures radiales de renfort dont le nombre est avantageusement un multiple du nombre de moyens de retenue, permet d'obtenir un moyen de protection suffisamment large pour empêcher un arbre de rotation d'un autre roue d'entraînement de venir en appui contre le moyen de retenue.

La roue d'entraînement peut en outre comporter une ou plusieurs des caractéristiques suivantes, séparément ou prises en combinaison :
- le moyen de retenue est flexible, et la roue d'entraînement comprend un moyen de limitation de la flexion du moyen de retenue ;
- le moyen de protection est agencé à une distance prédéterminée du moyen de retenue associé de manière à limiter la flexion du moyen de retenue associé ;
- le moyen de limitation de la flexion du moyen de retenue est réalisé d'une seule pièce avec le moyen de protection ;
- le moyen de protection est agencé en regard du moyen de retenue associé;
- le moyen de limitation de la flexion du moyen de retenue comprend une butée agencée en vis-à-vis du moyen de retenue associé à une distance prédéterminée du moyen de retenue associé de manière à limiter la flexion du moyen de retenue associé ;
- la butée est réalisée sous la forme d'une nervure s'étendant radialement par rapport à l'axe de rotation de la roue d'entraînement.

Ainsi, lorsqu'un élément externe à la roue d'entraînement vient appuyer sur les moyens de retenue par le dessus, les moyens de retenue de l'aimant du fait de leur flexibilité risquent de s'échapper vers l'extérieur de la roue d'entraînement et de rompre au-delà d'un certain seuil. La distance à laquelle le moyen de limitation de flexion est agencé par rapport au(x) moyen(s) de retenue associé(s) est prédéterminée notamment en fonction de la matière des moyens de retenue et du point limite de rupture de ce matériau.

Agencé à la distance prédéterminée, le moyen de limitation de flexion empêche le moyen de retenue d'atteindre le point de rupture et de se casser.

Par ailleurs, lors de la mise en place de l'aimant sur la roue d'entraînement, les moyens de retenue de l'aimant du fait de leur flexibilité risquent aussi de s'échapper vers l'extérieur de la roue d'entraînement et sont protégés par ce moyen de limitation de flexion.

L'invention concerne encore un système d'entraînement notamment d'un mécanisme d'essuyage de panneau vitré de véhicule automobile, comprenant notamment un moteur d'entraînement réversible, caractérisé en ce que ledit système d'entraînement comporte une roue d'entraînement telle que définie précédemment.

D'autres caractéristiques et avantages de l'invention ressortiront de la description suivante, donnée à titre d'exemple, sans caractère limitatif, en regard des dessins annexés parmi lesquels :
- la figure 1 est une vue de côté représentant un ensemble comprenant une roue d'entraînement et un arbre de rotation associé d'un mécanisme d'entraînement d'un système d'essuyage de panneau vitré pour véhicule automobile,
- la figure 2 est une vue en perspective de la roue d'entraînement et de l'arbre de rotation de la figure 1,
- la figure 3 est une vue en perspective d'une première roue d'entraînement et d'arbres de rotation d'autres roues d'entraînement venant en appui contre la première roue d'entraînement,
- la figure 4 est une vue de face de la roue d'entraînement de la figure 2 portant un aimant,
- la figure 5 est une vue en perspective partielle de la roue d'entraînement de la figure 4,
- la figure 6 est une vue partielle de côté de la roue d'entraînement de la figure 5 montrant plus en détail des moyens de retenue de l'aimant et des moyens de protection des moyens de retenue de l'aimant, et
- la figure 7 représente un système d'entraînement selon l'invention.

Sur ces figures les éléments identiques portent les mêmes numéros de référence.

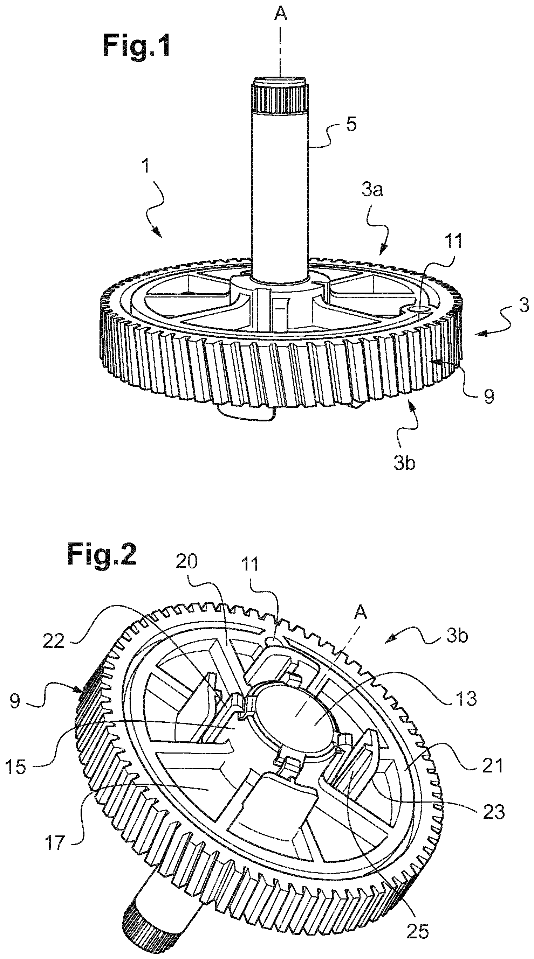

Les figures 1 et 2 représentent de façon partielle un système d'entraînement désigné par la référence 1, notamment d'un mécanisme d'essuyage d'un panneau vitré de véhicule automobile, par exemple le pare-brise avant du véhicule.

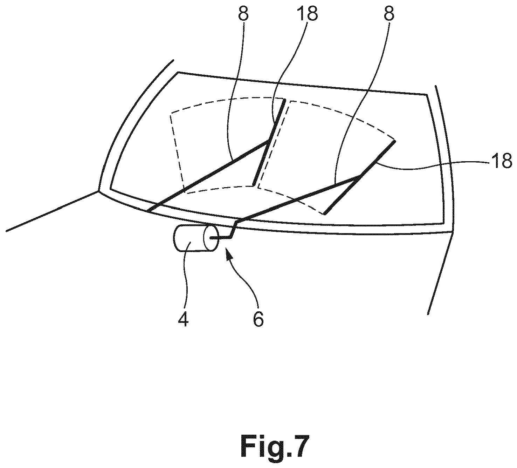

De façon classique, tel qu'illustré sur la figure 7, le système d'entraînement 1 comporte un moteur d'entraînement 4, et un moyen de transformation 6 du mouvement de rotation de l'arbre d'entraînement en un mouvement de rotation alternée d'un arbre de sortie, de façon à générer un mouvement de balayage alterné d'au moins un bras d'entraînement 8 d'un balai d'essuyage 18 9en contact avec le panneau vitré.

Selon le mode de réalisation décrit, le moteur d'entraînement est un moteur électrique réversible.

Le moyen de transformation de mouvement comporte une roue d'entraînement 3, qui est montée en rotation autour d'un axe de rotation A, et un arbre de rotation 5 apte à être fixé sur la roue d'entraînement 3.

La roue d'entraînement 3 présente une première face 3a et une deuxième face 3b opposée à la première face 3a.

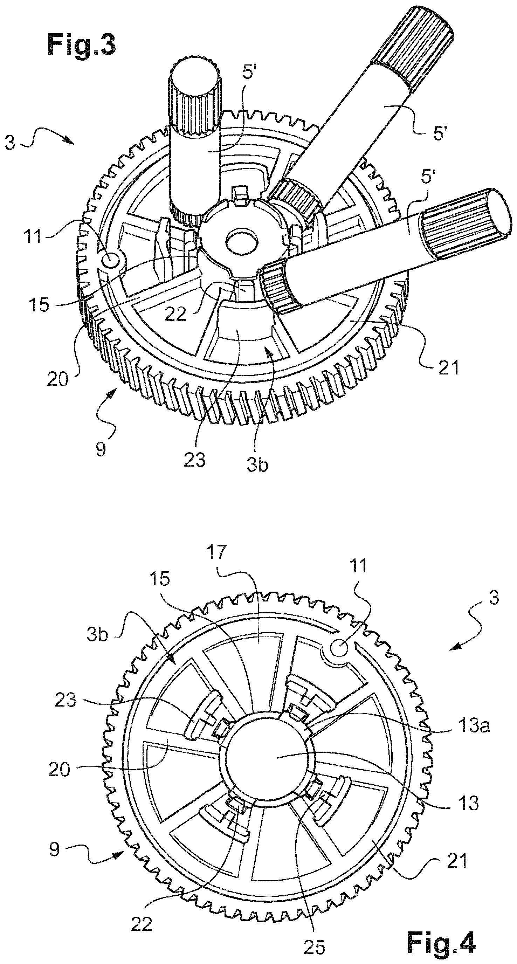

Selon l'exemple illustré sur les figures 1 et 2, l'arbre de rotation 5 est un arbre de rotation central fixé sensiblement au centre de la roue d'entraînement 3. La roue d'entraînement 3 mieux visible sur les figures 3 et 4 présente un alésage 7 central pour la fixation de l'arbre de rotation 5. L'arbre de rotation 5 est par exemple fixé sur la première face 3a de la roue d'entraînement 3.

La roue d'entraînement 3 est par exemple une roue dentée présentant sur son rebord périphérique une denture 9.

La roue d'entraînement 3 peut par exemple être entraînée en rotation par l'arbre moteur (non représenté) via une vis sans fin montée à l'extrémité de l'axe du rotor de l'arbre moteur. À cet effet, la denture 9 peut engrener la vis sans fin (non représentée) liée à l'arbre moteur.

L'arbre de rotation 5 de la roue d'entraînement 3 peut être en prise directe avec le bras d'entraînement du balai d'essuyage (non représenté).

En alternative, la roue d'entraînement 3 peut être reliée au bras d'entraînement 8 du balai d'essuyage par un ensemble de pièces mobiles, telle qu'une manivelle et un ensemble de bielles manivelles, par l'intermédiaire desquelles le mouvement de rotation de la roue d'entraînement 3 est transformé en un mouvement de rotation alternée de l'arbre de sortie portant par exemple le bras d'entraînement d'un balai d'essuyage 18 du panneau vitré. À cet effet, selon l'exemple représenté, la roue d'entraînement 3 peut présenter un alésage secondaire 11, dit de référence permettant un positionnement correct de la manivelle (non illustrée).

Par ailleurs, la commande du moteur du système d'entraînement est fonction de la position du balai par rapport au panneau vitré. L'information relative à la position du balai par rapport au panneau vitré est déterminée par rapport à la position angulaire de la roue d'entraînement 3. Pour cela, le système d'entraînement 1 comporte avantageusement un moyen de détection de la position angulaire de la roue d'entraînement 3.

Le moyen de détection de la position angulaire de la roue d'entraînement 3 comprend par exemple au moins un aimant 13 visible sur la figure 2. Un tel aimant 13 est apte à coopérer avec un capteur (non représenté sur les figures) agencé à proximité de l'aimant 13, de manière à détecter la position angulaire de l'aimant 13. À titre d'exemple, le capteur (non représenté) peut être agencé au-dessus de l'aimant 13 sur une carte électronique et notamment dans l'axe de la roue d'entraînement 3. Le moyen de commande peut alors gérer la vitesse ou le sens de rotation du moteur d'entraînement (non représenté) en fonction de l'information sur la position angulaire de l'aimant 13 et donc de la roue d'entraînement 3 portant l'aimant 13.

La roue d'entraînement 3 selon l'invention est donc apte à porter un tel aimant 13. Selon l'exemple illustré sur les figures 2 à 5, c'est la deuxième face 3b de la roue d'entraînement 3 qui est apte à porter l'aimant 13. L'aimant 13 est donc agencé du côté de la roue d'entraînement 3 opposé à l'arbre de rotation 5.

À cet effet, la roue d'entraînement 3 présente sur sa deuxième face 3b un support 15 de l'aimant. Comme on le voit mieux sur la figure 3, le support 15 de l'aimant 13 forme une saillie par rapport à une surface sensiblement plane 17 de la deuxième face 3b de la roue d'entraînement 3. Cette surface 17 est couramment nommée voile ou toile.

Le support 15 de l'aimant 13 est selon l'exemple illustré centré sur l'axe de rotation A de la roue d'entraînement 3 (cf figure 2).

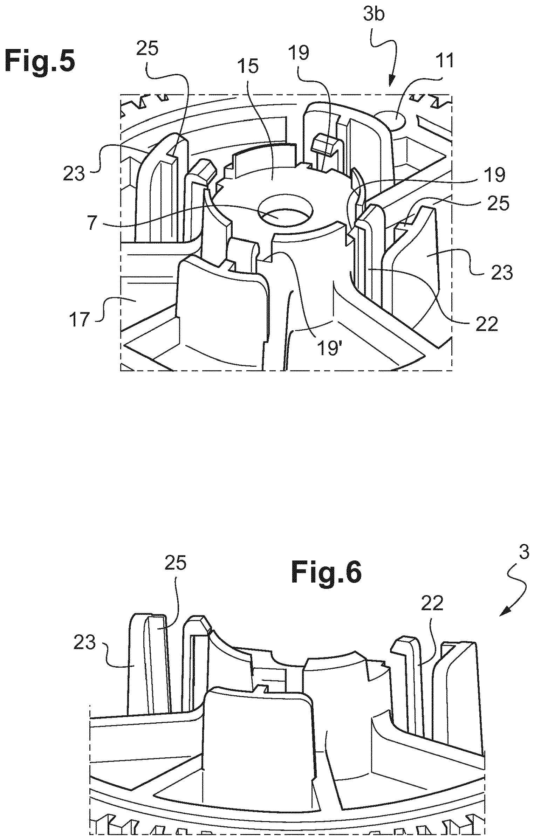

Le support 15 peut présenter au moins un logement, visible en particulier sur la figure 5, apte à recevoir au moins en partie l'aimant 13. Le support 15 présente dans cet exemple une ou plusieurs encoches 19, 19' pour le montage de l'aimant 13.

Dans le cas de plusieurs encoches 19, 19' on peut prévoir une encoche de référence 19', par exemple plus large que les autres encoches 19, permettant un positionnement unique de l'aimant 13. L'aimant 13 comporte des moyens complémentaires, tels que des pattes 13a aptes à être insérées dans les encoches 19, 19' associées. Selon l'exemple de réalisation avec une encoche de référence 19' l'aimant 13 présente de préférence une partie de référence, par exemple une patte 13a plus large que les autres pattes 13a de façon complémentaire à l'encoche de référence 19'.

Selon le mode de réalisation illustré sur les figures 2 à 5, la roue d'entraînement 3 peut présenter des nervures de renfort 20 qui s'étendent radialement par rapport à l'axe de rotation A de la roue d'entraînement 3 depuis le support 15 de l'aimant 13 jusqu'à une nervure périphérique extérieure 21.

Les nervures de renfort 20 radiales et la nervure périphérique extérieure 21 sont également en saillie par rapport à la surface 17 de la deuxième face 3b de la roue d'entraînement 3.

Les nervures de renfort 20 radiales permettent de rigidifier la roue d'entraînement 3 et d'améliorer la tenue mécanique.

Les nervures de renfort 20 sont par exemple réalisées sous la forme d'éléments sensiblement parallélépipédiques qui s'étendent radialement par rapport à l'axe de rotation A de la roue d'entraînement 3.

La nervure périphérique extérieure 21 a pour rôle d'empêcher un contact entre les nervures de renfort 20 radiales et la denture 9 de la roue d'entraînement 3.

L'alésage secondaire de référence 11 est par exemple ménagé au niveau de la nervure périphérique extérieure 21.

La roue d'entraînement 3 présente en outre au moins un moyen de retenue 22 de l'aimant 13.

Le ou les moyens de retenue 22 de l'aimant 13 sont donc agencés sur la deuxième face 3b de la roue d'entraînement 3 portant l'aimant 13.

Plus précisément, un ou plusieurs moyens de retenue 22 sont respectivement agencés en regard des encoches 19, 19' de façon à venir maintenir les pattes 13a de l'aimant 13 dans les encoches respectives 19, 19'.

Selon l'exemple illustré, la roue d'entraînement 3 présente quatre moyens de retenue 22. L'homme du métier peut adapter le nombre de moyens de retenue 22 de l'aimant 13 présents sur la deuxième face 3b de la roue d'entraînement 3.

Le nombre de moyens de retenue 22 de l'aimant 13 a une incidence sur le nombre de nervures de renfort 20 radiales qui sera choisi avantageusement comme un multiple du nombre de moyens de retenue 22 selon un compromis entre l'encombrement et la tenue mécanique de la roue d'entraînement 3.

Avantageusement, les moyens de retenue 22 sont agencés autour du support 15 de l'aimant 13 en formant un premier cercle centré sur le support 15 de l'aimant 13. Le support 15 étant centré sur l'axe de rotation A central de la roue d'entraînement 3, le premier cercle de moyens de retenue 22 présente donc le même centre que la roue d'entraînement 3.

Les moyens de retenue 22 sont ici réalisés d'une seule pièce avec la roue d'entraînement 3.

Les moyens de retenue 22 de l'aimant 13 se présentent selon cet exemple sous la forme d'une pluralité d'éléments en saillie, par rapport à la surface 17 de la deuxième face 3b de la roue d'entraînement 3.

Les moyens de retenue 22 sont dans l'exemple décrit réalisés sous la forme d'éléments flexibles.

Plus précisément, les moyens de retenue 22 peuvent être réalisés sous la forme de languettes 21 formant des clips de fixation de l'aimant 13 sur le support 15.

Selon le mode de réalisation décrit, les languettes 21 s'étendent sur une hauteur sensiblement égale ou supérieure à la hauteur du support 15 de l'aimant 13.

La roue d'entraînement 3 présente en outre au moins un moyen de protection 23 d'au moins un moyen de retenue 22 associé de l'aimant 13 agencé en regard du moyen de retenue associé 22.

On peut donc prévoir un moyen de protection 23 associé à un unique moyen de retenue 22 de l'aimant 13, ou à plusieurs moyens de retenue 22 de l'aimant, voire à l'ensemble des moyens de retenue 22 de l'aimant 13.

Le ou les moyens de protection 23 sont agencés de manière à protéger le ou les moyens de retenue 22 associés en particulier lors du transport de plusieurs roues d'entraînement 3 dans un même contenant. En effet, comme représenté de façon schématique sur la figure 3, les moyens de protection 23 empêchent à des éléments externes de la roue d'entraînement 3 sur laquelle ils sont agencés de venir solliciter les moyens de retenue 22 associés. Les éléments externes sont dans l'exemple illustré sur la figure 3 des arbres de rotation 5' associés à d'autres roues d'entraînement non illustrées sur la figure 3.

Le moyen de protection 23 d'au moins un moyen de retenue associé 22 de l'aimant 13 est avantageusement agencé à une distance prédéterminée du support 15 de l'aimant 13 inférieure au diamètre d'un arbre de rotation 5' externe à la roue d'entraînement 3 portant le moyen de protection 23. En conséquence, les extrémités des arbres de rotation 5' des autres roues ne peuvent plus venir solliciter par le côté les moyens de retenue 22.

Le moyen de protection 23 est agencé en s'étendant selon une direction circulaire de manière à présenter de la matière dépassant de part et d'autre du moyen de retenue 22. Le moyen de protection 23 est alors plus large que le ou les moyens de retenue 22 auquel il est associé.

Le moyen de protection 23 associé d'un moyen de retenue 22 s'étend par exemple entre deux nervures de renfort 20 radiales.

À titre d'exemple illustratif, en alternative, dans le cas d'un moyen de protection 23 commun pour l'ensemble des moyens de retenue 22 de l'aimant, on peut prévoir un anneau apte à venir coiffer l'ensemble des moyens de retenue 22. Cet anneau provisoire est dans ce cas amovible et peut être retiré une fois l'approvisionnement des roues d'entraînement 3 terminé.

Selon le mode de réalisation illustré, le moyen de protection 23 est réalisé d'une seule pièce avec la roue 3.

Plus précisément, dans l'exemple illustré, la roue d'entraînement 3 présente une pluralité de moyens de protection 23 respectivement associés à un moyen de retenue 22 de l'aimant 13.

Le moyen de protection 23 d'un moyen de retenue 22 associé de l'aimant 13 comprend au moins une nervure de protection 23, ici une nervure de protection 23, agencée en regard du moyen de retenue 22 associé de l'aimant 1. Le moyen de retenue 22 se trouve donc agencé entre le support 15 de l'aimant 13 et la nervure de protection 23 associée.

Dans l'exemple illustré, une nervure de protection 23 s'étend selon une direction circulaire avec de la matière dépassant de part et d'autre du moyen de retenue 22, et présente une forme sensiblement en arc de cercle.

La ou les nervures de protection 23 sont donc également agencées sur la deuxième face 3b de la roue d'entraînement 3 portant l'aimant 13.

Selon l'exemple illustré sur les figures 2 à 5, la roue d'entraînement 3 présente quatre nervures de protection 23 respectivement agencées en vis-à-vis des quatre moyens de retenue 22 de l'aimant 13 réalisés sous forme de languettes 21.

Avantageusement, les moyens de protection 23, ici les nervures de protection 23, sont agencés autour des moyens de retenue 22 de l'aimant 13 en formant un deuxième cercle également centré sur le support 15 de l'aimant 13. Les premier et deuxième cercles sont concentriques.

Les moyens de protection 23, réalisés dans cet exemple par des nervures de protection 23, se présentent selon l'exemple de réalisation illustré sur les figures 2 à 5 sous la forme d'une pluralité d'éléments en saillie, par rapport à la surface 17 de la deuxième face 3b de la roue d'entraînement 3.

Les moyens de protection 23 présentent respectivement une hauteur sensiblement égale ou supérieure à la hauteur du moyen de retenue associé 22. Ce moyen de retenue 22 associé peut présenter lui-même une hauteur sensiblement égale ou supérieure à la hauteur du support 15 de l'aimant 13.

Ainsi, un élément externe à la roue d'entraînement 3 en référence, tel qu'un arbre de rotation 5' d'une autre roue d'entraînement, arrivant au-dessus de la deuxième face 3b de la roue d'entraînement 3 en référence, est donc en appui à la fois sur le support 15 de l'aimant 13, les moyens de retenue 22 et les moyens de protection 23 associés. Ceci a pour effet de limiter les efforts sur les moyens de retenue 22 et de limiter ainsi les risques de rupture des moyens de retenue 22.

En outre, comme dit précédemment, le moyen de retenue 22 peut être un élément flexible.

Afin d'éviter la casse du moyen de retenue 22 atteignant le point de rupture, par exemple à cause d'une sollicitation provenant du dessus de la face 3b de la roue d'entraînement 3, la roue d'entraînement 3 comprend un moyen de limitation de la flexion du moyen de retenue 22.

Selon un exemple de réalisation, le moyen de limitation de la flexion du moyen de retenue 22 comprend une butée 25 agencée en vis-à-vis du moyen de retenue 22 associé à une distance prédéterminée du moyen de retenue 22 associé de manière à limiter la flexion du moyen de retenue 22 associé. Une telle butée 25 est visible sur les figures 2 et 4 à 6. Par exemple cette distance prédéterminée est fonction de la matière du moyen de retenue 22 flexible et de sa limite de rupture.

La butée 25 est donc interposée entre le moyen de retenue 22 et le moyen de protection 23, dans l'exemple décrit sous forme de nervure de protection 23.

La butée 25 est donc apte à limiter le déplacement du moyen de retenue 22 associé. En particulier, la butée 25 est apte à limiter un déplacement radial, c'est-à-dire selon un rayon de la roue d'entraînement 3, du moyen de retenue associé 22.

La butée 25 est réalisée dans cet exemple sous la forme d'une nervure s'étendant radialement par rapport à l'axe de rotation de la roue d'entraînement 3. La nervure formant butée 25 s'étend alors sensiblement perpendiculairement à la nervure de protection 23.

Les butées 25 peuvent s'étendre sur une hauteur sensiblement égale ou supérieure à la hauteur du support 15.

Le moyen de limitation de la flexion du moyen de retenue 22 est avantageusement réalisé d'une seule pièce avec le moyen de protection 23. Ainsi, le moyen de protection 23 assure en outre cette fonction de limitation de la flexion du ou des moyens de retenue 22 associés.

À cet effet, le moyen de protection 23 (cf figure 3) peut être agencé en regard du ou des moyens de retenue 22 associés à une distance prédéterminée de manière à limiter la flexion du moyen de retenue 22 associé.

Selon la variante de réalisation illustré sur les figures 2 et 4 à 6, le moyen de limitation de la flexion du moyen de retenue 22 comprend une butée 25 réalisée d'une seule pièce avec une nervure de protection 23.

Ainsi, en particulier dans le cas d'une sollicitation par un élément externe à la roue d'entraînement 3 arrivant par exemple au-dessus de la deuxième face 3b de la roue d'entraînement 3, les butées 25 par exemple réalisées d'une seule pièce avec les moyens de protection, tels que les nervures de protection 23, ou les nervures de protection 23 elles-mêmes lorsqu'elles sont agencées à une distance adéquate d'un ou de moyens de retenue 22 associés, limitent la flexion du ou des moyens de retenue 22 avant d'atteindre leur point limite de rupture empêchant ainsi la casse des moyens de retenue 22.

On comprend donc que les moyens de protection 23 de la roue d'entraînement 3, présentant avantageusement une deuxième fonction de limitation de flexion, permettent de réduire le taux de rebuts du à une détérioration voire une casse des moyens de retenue 22 de l'aimant 13, en particulier lors du transport de plusieurs roues d'entraînement 3 ou encore lors de la mise en place de l'aimant 13 sur la roue d'entraînement 3.

## Revendications

1. Roue d'entraînement (3) d'un système d'entraînement (1) d'un mécanisme d'essuyage de panneau vitré de véhicule automobile, présentant :
- un support (15) apte à porter un aimant (13) pour la détection de la position angulaire de la roue d'entraînement (3), et
- au moins un moyen de retenue (22) de l'aimant (13) sur le support (15),
la roue d'entraînement (3) présentant en outre au moins un moyen de protection (23) d'au moins un moyen de retenue (22) la roue d'entraînement étant **caractérisé en ce que** le moyen de protection est associé de l'aimant (13) agencé en regard du moyen de retenue associé (22).

2. Roue d'entraînement (3) selon la revendication 1, dans laquelle le moyen de protection (23) est agencé en s'étendant selon une direction circulaire de manière à présenter de la matière dépassant de part et d'autre du moyen de retenue (22) associé.

3. Roue d'entraînement (3) selon l'une des revendications 1 ou 2, dans laquelle le moyen de protection (23) est réalisé d'une seule pièce avec la roue d'entraînement (3).

4. Roue d'entraînement (3) selon l'une quelconque des revendications précédentes, dans laquelle le moyen de protection (23) d'un moyen de retenue associé (22) de l'aimant (13) est agencé à une distance prédéterminée du support (15) de l'aimant (13) inférieure au diamètre d'un arbre de rotation (5') externe à ladite roue d'entraînement (3).

5. Roue d'entraînement (3) selon l'une quelconque des revendications précédentes, dans laquelle le moyen de protection (23) d'un moyen de retenue (22) associé de l'aimant (13) comprend au moins une nervure de protection (23) agencée en regard d'un moyen de retenue (22) associé de l'aimant (13).

6. Roue d'entraînement (3) selon la revendication 5, dans laquelle la nervure de protection (23) présente une forme sensiblement en arc de cercle.

7. Roue d'entraînement (3) selon l'une quelconque des revendications précédentes, dans laquelle le moyen de retenue (22) de l'aimant (13) et le moyen de protection (23) associé sont agencés en saillie par rapport à une surface sensiblement plane (17) de la roue d'entraînement (3).

8. Roue d'entraînement (3) selon la revendication 7, dans laquelle le moyen de protection (23) présente une hauteur sensiblement égale ou supérieure à la hauteur du moyen de retenue associé (22).

9. Roue d'entraînement (3) selon l'une quelconque des revendications précédentes, comprenant :
- une pluralité de moyens de retenue (22) de l'aimant agencés autour du support (15) de l'aimant (13) selon un premier cercle ayant pour centre le support (15) de l'aimant (13),
- une pluralité de moyens de protection (23) respectivement associés à un moyen de retenue (22) de l'aimant (13) et agencés selon un deuxième cercle concentrique avec le premier cercle.

10. Roue d'entraînement (3) selon l'une quelconque des revendications précédentes, comprenant des nervures radiales de renfort, et dans laquelle le moyen de protection (23) associé d'un moyen de retenue (22) s'étend entre deux nervures radiales de renfort.

11. Roue d'entraînement (3) selon l'une quelconque des revendications précédentes, dans laquelle le moyen de retenue (22) est flexible, et la roue d'entraînement (3) comprend un moyen de limitation de la flexion (23, 25) du moyen de retenue (22).

12. Roue d'entraînement (3) selon la revendication 11, dans laquelle le moyen de limitation de la flexion du moyen de retenue (22) est réalisé d'une seule pièce avec le moyen de protection (23).

13. Roue d'entraînement (3) selon la revendication 12, dans laquelle le moyen de protection (23) est agencé en regard du moyen de retenue (22) associé à une distance prédéterminée du moyen de retenue (22) associé de manière à limiter la flexion du moyen de retenue (22) associé.

14. Roue d'entraînement (3) selon l'une des revendications 11 ou 12, dans laquelle le moyen de limitation de la flexion du moyen de retenue (22) comprend une butée (25) agencée en vis-à-vis du moyen de retenue (22) associé à une distance prédéterminée du moyen de retenue (22) associé de manière à limiter la flexion du moyen de retenue (22) associé.

15. Roue d'entraînement (3) selon la revendication 14, dans laquelle la butée (25) est réalisée sous la forme d'une nervure s'étendant radialement par rapport à l'axe de rotation (A) de la roue d'entraînement (3).

16. Système d'entraînement (1) notamment d'un mécanisme d'essuyage de panneau vitré de véhicule automobile, comprenant une roue d'entraînement (3) selon l'une quelconque des revendications précédentes.

## Patentansprüche

1. Antriebsrad (3) eines Antriebssystems (1) eines Mechanismus zum Wischen einer Glasscheibe eines Kraftfahrzeugs, das aufweist:
- einen Träger (15), der einen Magnet (13) zur Erfassung der Winkelstellung des Antriebsrads (3) tragen kann, und
- mindestens eine Halteeinrichtung (22) des Magnets (13) auf dem Träger (15),
wobei das Antriebsrad (3) außerdem mindestens eine Schutzeinrichtung (23) mindestens einer Halteeinrichtung (22) aufweist, wobei das Antriebsrad **dadurch gekennzeichnet ist, dass** die Schutzeinrichtung dem Magnet (13) zugeordnet ist, der gegenüber der zugeordneten Halteeinrichtung (22) angeordnet ist.

2. Antriebsrad (3) nach Anspruch 1, wobei die Schutzeinrichtung (23) angeordnet ist, indem sie sich gemäß einer Kreisrichtung erstreckt, um Material aufzuweisen, das zu beiden Seiten der zugeordneten Halteeinrichtung (22) übersteht.

3. Antriebsrad (3) nach einem der Ansprüche 1 oder 2, wobei die Schutzeinrichtung (23) aus einem Stück mit dem Antriebsrad (3) hergestellt ist.

4. Antriebsrad (3) nach einem der vorhergehenden Ansprüche, wobei die Schutzeinrichtung (23) einer zugeordneten Halteeinrichtung (22) des Magnets (13) in einem vorbestimmten Abstand zum Träger (15) des Magnets (13) geringer als der Durchmesser einer Drehwelle (5') außerhalb des Antriebsrads (3) angeordnet ist.

5. Antriebsrad (3) nach einem der vorhergehenden Ansprüche, wobei die Schutzeinrichtung (23) einer zugeordneten Halteeinrichtung (22) des Magnets (13) mindestens eine Schutzrippe (23) enthält, die gegenüber einer zugeordneten Halteeinrichtung (22) des Magnets (13) angeordnet ist.

6. Antriebsrad (3) nach Anspruch 5, wobei die Schutzrippe (23) im Wesentlichen eine Kreisbogenform aufweist.

7. Antriebsrad (3) nach einem der vorhergehenden Ansprüche, wobei die Halteeinrichtung (22) des Magnets (13) und die zugeordnete Schutzeinrichtung (23) bezüglich einer im Wesentlichen ebenen Fläche (17) des Antriebsrads (3) vorstehend angeordnet sind.

8. Antriebsrad (3) nach Anspruch 7, wobei die Schutzeinrichtung (23) eine Höhe im Wesentlichen gleich der oder höher als die Höhe der zugeordneten Halteeinrichtung (22) aufweist.

9. Antriebsrad (3) nach einem der vorhergehenden Ansprüche, das enthält:
- eine Vielzahl von Halteeinrichtungen (22) des Magnets, die um den Träger (15) des Magnets (13) herum gemäß einem ersten Kreis angeordnet sind, der den Träger (15) des Magnets (13) zur Mitte hat,
- eine Vielzahl von Schutzeinrichtungen (23), die je einer Halteeinrichtung (22) des Magnets (13) zugeordnet und gemäß einem zweiten Kreis konzentrisch zum ersten Kreis angeordnet sind.

10. Antriebsrad (3) nach einem der vorhergehenden Ansprüche, das radiale Verstärkungsrippen enthält, und wobei die zugeordnete Schutzeinrichtung (23) einer Halteeinrichtung (22) sich zwischen zwei radialen Verstärkungsrippen erstreckt.

11. Antriebsrad (3) nach einem der vorhergehenden Ansprüche, wobei die Halteeinrichtung (22) biegsam ist, und das Antriebsrad (3) eine Begrenzungseinrichtung der Biegung (23, 25) der Halteeinrichtung (22) enthält.

12. Antriebsrad (3) nach Anspruch 11, wobei die Begrenzungseinrichtung der Biegung der Halteeinrichtung (22) aus einem Stück mit der Schutzeinrichtung (23) hergestellt ist.

13. Antriebsrad (3) nach Anspruch 12, wobei die Schutzeinrichtung (23) gegenüber der zugeordneten Halteeinrichtung (22) in einem vorbestimmten Abstand zur zugeordneten Halteeinrichtung (22) angeordnet ist, um die Biegung der zugeordneten Halteeinrichtung (22) zu begrenzen.

14. Antriebsrad (3) nach einem der Ansprüche 11 oder 12, wobei die Begrenzungseinrichtung der Biegung der Halteeinrichtung (22) einen Anschlag (25) enthält, der gegenüber der zugeordneten Halteeinrichtung (22) in einem vorbestimmten Abstand zur zugeordneten Halteeinrichtung (22) angeordnet ist, um die Biegung der zugeordneten Halteeinrichtung (22) zu begrenzen.

15. Antriebsrad (3) nach Anspruch 14, wobei der Anschlag (25) in Form einer Rippe hergestellt ist, die sich radial bezüglich der Drehachse (A) des Antriebsrads (3) erstreckt.

16. Antriebssystem (1) insbesondere eines Mechanismus zum Wischen einer Glasscheibe eines Kraftfahrzeugs, das ein Antriebsrad (3) nach einem der vorhergehenden Ansprüche enthält.

## Claims

1. Drive wheel (3) for a drive system (1) for driving a mechanism for wiping a glass panel of a motor vehicle, having:
- a holder (15) that is able to bear a magnet (13) for detecting the angular position of the drive wheel (3), and
- at least one retention means (22) for retaining the magnet (13) on the holder (15),
the drive wheel (3) also having at least one protection means (23) for protecting at least one retention means (22), the drive wheel being **characterized in that** the protection means is associated with the magnet (13) arranged next to the associated retention means (22).

2. Drive wheel (3) according to Claim 1, wherein the protection means (23) is arranged in a manner extending in a circular direction so as to exhibit material protruding on either side of the associated retention means (22).

3. Drive wheel (3) according to either of Claims 1 and 2, wherein the protection means (23) is produced in one piece with the drive wheel (3).

4. Drive wheel (3) according to any one of the preceding claims, wherein the protection means (23) for protecting an associated retention means (22) for the magnet (13) is arranged at a predetermined distance from the holder (15) of the magnet (13) that is less than the diameter of a rotating shaft (5') outside said drive wheel (3).

5. Drive wheel (3) according to any one of the preceding claims, wherein the protection means (23) for protecting an associated retention means (22) for the magnet (13) comprises at least one protective rib (23) arranged next to an associated retention means (22) for the magnet (13).

6. Drive wheel (3) according to Claim 5, wherein the protective rib (23) is substantially in the form of a circular arc.

7. Drive wheel (3) according to any one of the preceding claims, wherein the retention means (22) for the magnet (13) and the associated protection means (23) are arranged in a manner projecting from a substantially flat surface (17) of the drive wheel (3).

8. Drive wheel (3) according to Claim 7, wherein the protection means (23) has a height substantially equal to or greater than the height of the associated retention means (22).

9. Drive wheel (3) according to any one of the preceding claims, comprising:
- a plurality of retention means (22) for the magnet that are arranged around the holder (15) of the magnet (13) in a first circle, the centre of which is the holder (15) of the magnet (13),
- a plurality of protection means (23) that are respectively associated with a retention means (22) for the magnet (13) and are arranged in a second circle concentric with the first circle.

10. Drive wheel (3) according to any one of the preceding claims, comprising radial reinforcing ribs, and wherein the protection means (23) associated with a retention means (22) extends between two radial reinforcing ribs.

11. Drive wheel (3) according to any one of the preceding claims, wherein the retention means (22) is flexible, and the drive wheel (3) comprises a means (23, 25) for limiting the bending of the retention means (22).

12. Drive wheel (3) according to Claim 11, wherein the means for limiting the bending of the retention means (22) is produced in one piece with the protection means (23).

13. Drive wheel (3) according to Claim 12, wherein the protection means (23) is arranged next to the associated retention means (22) at a predetermined distance from the associated retention means (22) so as to limit the bending of the associated retention means (22).

14. Drive wheel (3) according to either of Claims 11 and 12, wherein the means for limiting the bending of the retention means (22) comprises a stop (25) arranged facing the associated retention means (22) at a predetermined distance from the associated retention means (22) so as to limit the bending of the associated retention means (22).

15. Drive wheel (3) according to Claim 14, wherein the stop (25) is produced in the form of a rib extending radially with respect to the axis of rotation (A) of the drive wheel (3).

16. Drive system (1) notably for driving a mechanism for wiping a glass panel of a motor vehicle, comprising a drive wheel (3) according to any one of the preceding claims.
